# EUROPEAN PATENT SPECIFICATION

(11) **EP 0 407 364 B1**
(45) Date of publication and mention of the grant of the patent: **21.09.1994**
(21) Application number: 90830304.3
(22) Date of filing: 03.07.1990
(51) Int. Cl.: B29C 47/12, B29C 47/04, B60R 13/06

(54) **A weatherstrip for motor-vehicle bodywork, an extrusion head and a method for producing the weatherstrip**
Dichtungsstreifen für Fahrzeug-Karosserie, Extruderkopf und Verfahren zur Herstellung von Dichtungsstreifen
Bande d'étanchéité pour carrosserie de véhicule à moteur, tête d'extrusion et procédé de fabrication de la bande d'étanchéité

(30) Priority: 05.07.1989 IT 6755689
(43) Date of publication of application: 09.01.1991
(73) Proprietor: S.A.I.A.G. S.p.A., I-10073 Cirie'Torino (IT)
(72) Inventor: Azzola, Roberto, I-10141 Torino (IT)
(74) Representative: Quinterno, Giuseppe

(56) References cited:
- EP-A- 0 115 750
- EP-A- 0 116 264
- EP-A- 0 200 582
- FR-A- 1 498 280
- FR-A- 2 579 927
- GB-A- 2 206 839
- US-A- 2 780 835
- US-A- 4 067 146
- PATENT ABSTRACTS OF JAPAN, vol. 11, no. 339 (M-639)[2786], 6th November 1987;& JP-A-62 121 030 (TOYODA GOSEI CO., LTD)

## Description

The present invention relates to a weatherstrip for the edge of an aperture in, or a closure element for, the bodywork of a motor vehicle of the type defined in the preamble of Claim 1.

The invention relates, in particular, to a weatherstrip of the type defined above which is intended to be fitted to an edge which has critical zones for the application of the weatherstrip.

The expression "critical zone" means, for example, a corner portion with a small radius of curvature or an edge portion immediately adjacent an obstacle (for example an hinge), as will become clearer from the following.

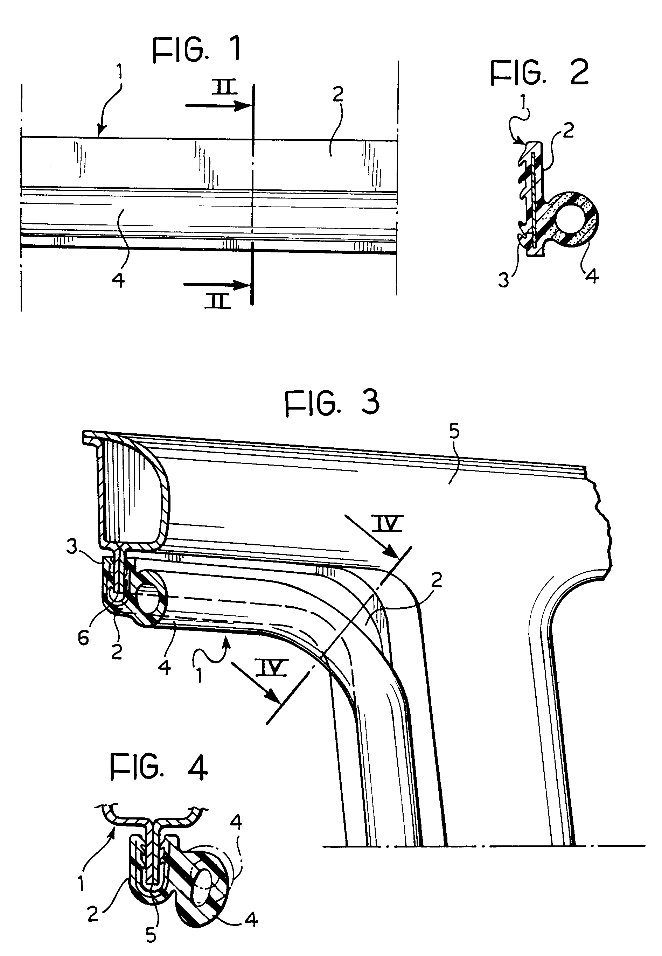

Weatherstrips of this type are generally provided with a metal core which is incorporated in the anchoring profile during extrusion. The metal core is usually constituted by a strip which is supplied to an extrusion head together with the elastomeric material to be extruded. After extrusion, such conventional weatherstrips have, for example, the appearance shown in Figures 1 and 2 of the appended drawings. In these drawings, a length of a weatherstrip is generally indicated 1 and comprises a flattened anchoring profile 2 of solid elastomeric material, in which the metal core 3 is incorporated, and a tubular sealing profile 4, for example of cellular elastomeric material, connected to and coextruded with the anchoring profile 2.

After extrusion and before application, the anchoring profile 2 is bent to form a U-shaped cross-section. During application, the weatherstrip is applied to the edge of an aperture, for example the edge of an access aperture in the bodywork of a motor vehicle, so that the anchoring profile grips the edge as shown schematically in Figure 3. This drawing shows part of an aperture in the bodywork 5 of a motor vehicle, whose edge 6 has been fitted with a weatherstrip 1 of the conventional type described above. More particularly, a corner portion of the edge of an aperture is shown in Figure 3. As can be seen in this drawing, in the corner portion of the aperture, the anchoring profile of the weatherstrip can be made to fit the curved shape of the edge of the aperture. The tubular sealing profile 4, which is relatively more resilient, tends to be deformed in the corner region, as shown in Figure 4. As is seen in this drawing, in the corner region, the tubular profile 4 tends to "cut the corner" (that is to follow the curve of the edge of the aperture with a larger radius of curvature than that of the edge) and, which is worse, this profile is flattened. The ideal position of the tubular sealing profile in the corner region is shown in broken outline in Figure 4.

As a result of the deformation described above, the tubular sealing profile 4 cannot ensure perfect sealing in the corner region of the aperture.

Similar problems arise when the conventional weatherstrips described above are anchored to the periphery of a closure element (for example a door) associated with an aperture in the bodywork of a motor vehicle.

The disadvantages of the conventional weatherstrips described above have already been confronted and partially resolved by means of inventions which have formed the subjects of previous patents.

In order to resolve the problem of the flattening of the tubular sealing profile in correspondence with bends or corners in the edge to which the weatherstrip is applied, US-A-4 067 146 proposes the coextrusion of a series of sealing tabs which project from the outer surface of the distal portion of the sealing profile, exclusively in those portions of the profile which correspond to the critical regions of the edge to which the weatherstrip is to be applied.

This solution is not always acceptable from an æsthetic point of view since the sealing profile has a series of tabs in some regions, but these are absent in the rest of the weatherstrip. Moreover, this solution enables only the effective section of the sealing profile to be increased (by the addition of tabs) and not decreased should this be necessary.

EP-A-0 116 264 proposes the extrusion of the sealing profile in such a way that it is connected to the anchoring profile along a curved line in correspondence with the critical zones of the edge to which the weatherstrip is to be applied. This solution does, in fact, enable the sealing profile to achieve a better fit around the angles and curves of the edge of the aperture to which the weatherstrip is applied without a tendency to "cut" the curve. This solution does not, however, resolve the problem of the flattening of the sealing profile in correspondence with the critical zones of the edge.

EP-A-0 115 750, on the other hand, proposes the modification, during extrusion, of the wall thickness of those portions of the sealing profile of the weatherstrip which correspond to the critical zones of the edge to which the weatherstrip is to be applied. This variation in thickness is achieved while the internal transverse dimensions of the sealing profile are left unchanged. This type of solution, which consists of the local increase or decrease in the thickness of the wall of the sealing profile is not always sufficient to compensate for the flattening or bulging of the profile. Moreover, the thickening of the wall of the sealing profile may result in a change in the so-called closing load of the door of the motor vehicle.

In Patent Abstract of Japan, vol.11, No.339 (M-639), 2786, 6th November 1987 & JP-A-62121030 there is disclosed an extruded weatherstrip, according to the preamble of Claim 1, including a tubular sealing profile whose inside and outside dimensions are continuously varied in the extrusion process. The tubular sealing profile disclosed in this document has however considerable variations in wall thickness, which may result in a change of the closing load of the door.

The object of the present invention is, therefore, to provide an improved weatherstrip of the type specified above which overcomes the problem described above, in particular the flattening or bulging of the sealing profile in correspondence with the critical zones of the edge to which the weatherstrip is to be applied, without substantially affecting the closing load of the door.

According to the invention, this object is achieved by means of an extruded weatherstrip according to Claim 1.

The invention also relates to a method and an extruder for producing such a weatherstrip. Further characteristics and advantages of the present invention will become apparent from the detailed description which follows with reference to the appended drawings, provided by way of non-limiting example, in which:
Figures 1 and 2, which have already been described, show a prior-art weatherstrip;
Figures 3 and 4, which have also been described already, show a prior-art weatherstrip applied to a corner portion of the edge of an access aperture in the bodywork of the a motor vehicle;
Figure 5 is a perspective view of a length of weatherstrip according to the invention;
Figures 6 and 7 are sectional views of the weatherstrip of Figure 5 taken on the lines VI-VI and VII-VII of that figure respectively;
Figure 8 is a perspective view of an embodiment of an extrusion head according to the invention for the production of a weatherstrip of the type shown in Figures 5 to 7;
Figure 9 is an exploded perspective view of the extrusion head shown in Figure 8;
Figure 10 is a cross-section taken on the line X-X of Figure 8, and
Figure 11 is a perspective view of a variant of the extrusion head shown in Figures 8 to 10.

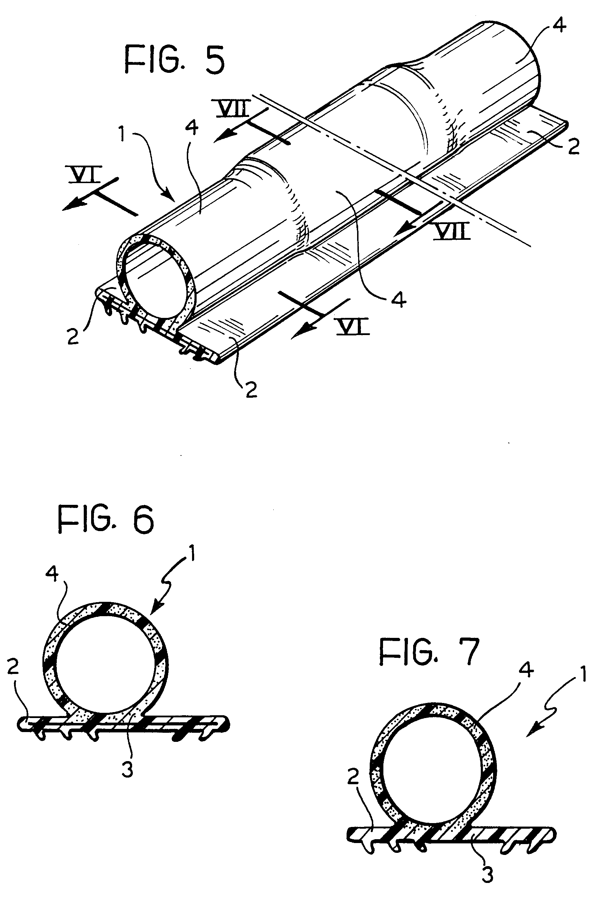

As shown in Figure 5, a weatherstrip 1 according to the invention comprises an anchoring profile 2, for example of solid elastomeric material, produced substantially in accordance with the prior art, to which is connected a tubular sealing profile 4 of elastomeric material, for example foam, coextruded with the anchoring profile 2. More particularly, as can be seen from Figures 5 to 7, according to the invention, those portions of the weatherstrip 1 which are intended to be fitted to corner portions of the edge of an aperture (for example in the situation shown in Figure 3) have a tubular sealing profile 4 with larger transverse dimensions but with substantially the same wall thickness. The larger transverse dimensions of the sealing profile 4 compensate for the squashing of this profile due to the curvature of the weatherstrip.

The transverse dimensions of the sealing profile 4 of a weatherstrip according to the invention may also be increased (or reduced according to circumstances) in those portions of the weatherstrip which are intended to be applied to an edge or a flange in a zone in which it is envisaged that the distance between the edge or flange and the edge of the associated door which will come into contact with the sealing profile in use is not strictly constant. The local variation in the transverse dimensions of the sealing profile compensates for variations or irregularities in spacing in such situations. After extrusion, the anchoring profile 2 of the weatherstrip shown in Figures 5 to 7 is also bent into a U-shape like that of the conventional weatherstrip.

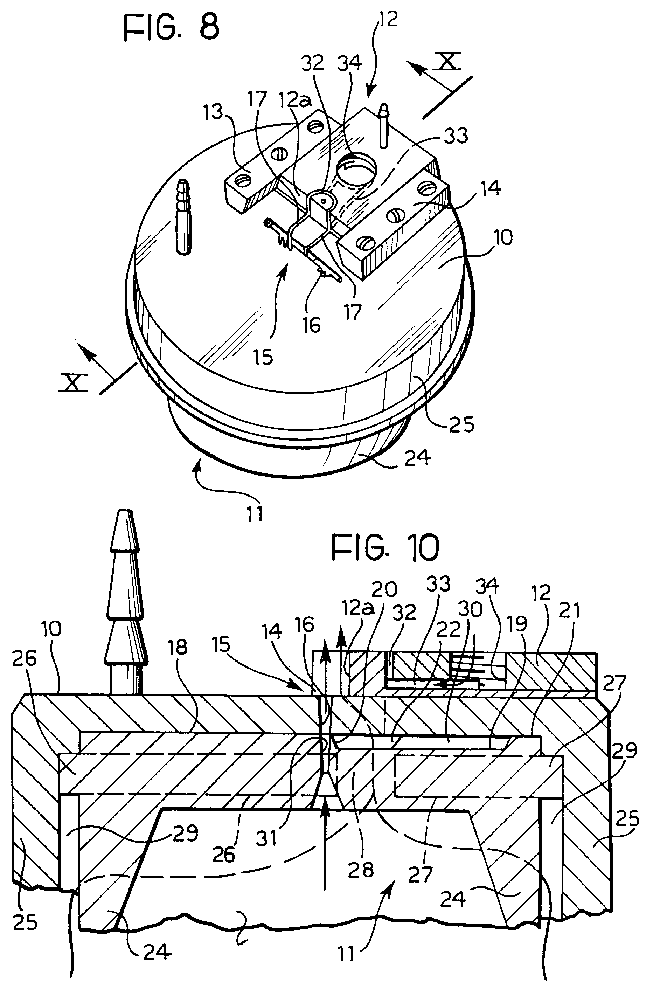

Figures 8 to 10 shown an embodiment of an extruder for producing weatherstrips according to the invention.

In the embodiment shown in Figures 8 to 10, the extrusion head includes an outer, substantially cup-shaped die 10 in which an inner, substantially beaker-shaped die 11 is inserted.

A movable member 12 is mounted on the outer front face of the die 10, on the opposite side from the inner die 11, and can slide between two guides 13 and 14 fixed to the die.

The outer die 10 has an extrusion orifice generally indicated 15. This orifice includes a main aperture 16 whose shape corresponds to the cross-section of the anchoring profile 2 of the weatherstrip to be extruded. The orifice 15 of the outer die 10 also has two arms 17 which communicate with the main aperture 16 and extend from the same side of the main aperture. As will become clearer from the following, the arms 17 of the orifice 15 enable the extrusion of corresponding proximal portions of the side walls of the sealing profile 4 of the weatherstrip according to the invention.

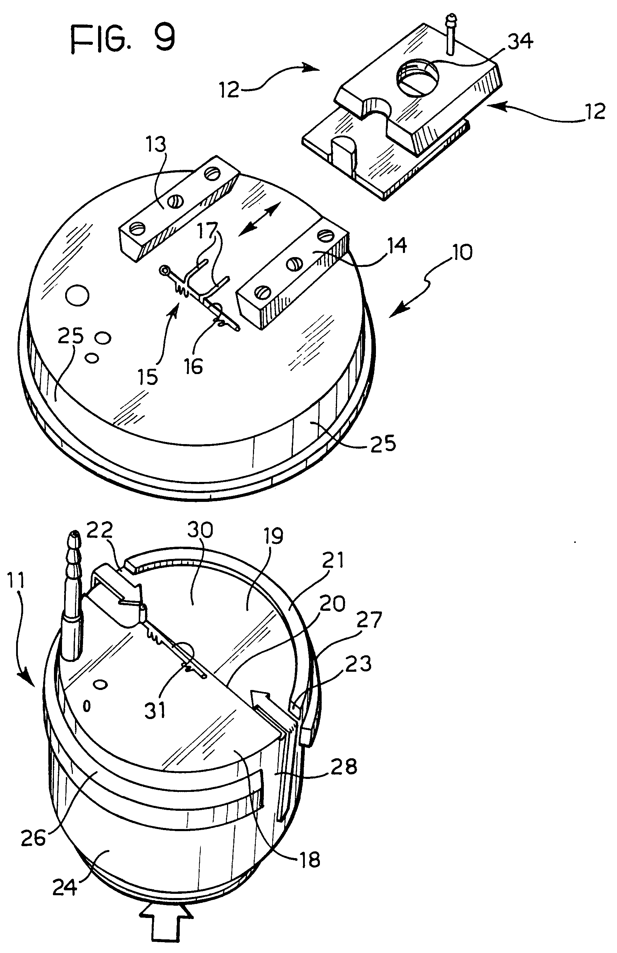

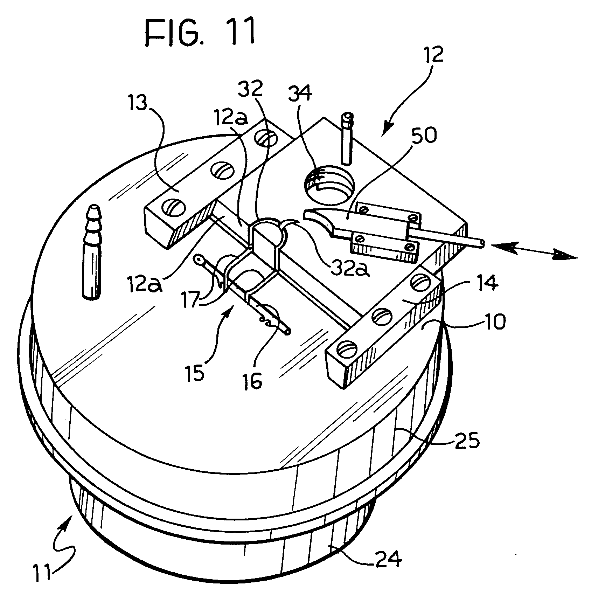

As shown in particular in Figures 9 and 10, on its side facing the outer die, the inner die has a flat, substantially circular end surface 18 and a recessed flat surface 19 between which an almost diametral step 20 is defined. An arcuate peripheral projection, indicated 21, partially surrounds the recessed surface 19 and its height is the same as that of the raised surface 18. Two passages, indicated 22 and 23 in Figure 9, are defined between the ends of the projection 21 and the ends of the step 20.

The inner die 11 has a substantially cylindrical skirt portion 24 whose outer diameter is smaller than the inner diameter of the surrounding skirt portion 25 of the outer die 10. Adjacent its end face, the skirt portion 24 of the inner die 11 has two projections 26 and 27 which extend along arcs of the same circle. The outer lateral surfaces of these projections lie in contact with the inner surface of the skirt portion 25 of the outer die 10 (Figure 10).

The projections 26 and 27 of the inner die (Figures 9 and 10) define between them passages 28 only one of which is visible in Figure 9.

An annular space, indicated 29 in Figure 10, is defined between the skirt portions 24 and 25 of the two dies.

When the inner die 11 is mounted in the die 10, a chamber 30 (Figure 10) is defined between the dies, and is delimited by the surface 19, the step 20 and the projection 21 of the inner die and by the inner surface of the end wall of the die 10. The chamber 30 communicates with the annular space 29 through the passages 28 defined between the projections 26 and 27 and the passages 22 and 23 defined between the projection 21 and the step 20 (see in particular Figure 9).

The inner die 11 has an extrusion orifice indicated 31 (Figures 9 and 10) whose shape corresponds to the cross-section of the anchoring profile 2 of the weatherstrip to be extruded and, hence, to the shape of the main aperture 16 of the orifice 15 of the outer die 10. The two dies are assembled so that the orifice 31 of the inner die 11 is aligned with the main aperture 16 of the orifice 15 of the outer die 10 (Figure 10).

The arms 17 of the orifice of the outer die 10 are formed in that part of the die wall which delimits the chamber 30.

The movable body 12 is mounted between the guides 13 and 14 for sliding in a direction such that one of its sides, indicated 12a in Figures 8 and 10 can obstruct the arms 17 of the orifice of the die 10.

An extrusion orifice 32 formed in the opposite surface of the body 12 from the die 10 has an arcuate shape corresponding to a distal arcuate portion of the wall of the sealing profile 4 and terminates in correspondence with the side 12a of the body, as can be seen in particular in Figures 8 and 9. A chamber 33 is formed in the body 12 (Figures 8 and 10) and communicates with the extrusion orifice 32 and with an aperture 34 formed in the surface of that body opposite the die 10.

In operation, a solid elastomeric material is supplied to the inner die 11 and is extruded through the orifice 31 of that die and the main aperture 16 of the orifice 15 of the outer die 10. A metal core which constitutes the reinforcement for the anchoring profile is advanced through the aperture (in known manner) simultaneously with the solid elastomeric material.

At the same time, a cellular elastomeric material is supplied to the annular space 29 between the two dies, reaches the chamber 30 and is then extruded through the portions of the arms 17 of the orifice of the outer die which are not obstructed by the movable body 12. The cellular material which emerges from the portions of the arms 17 which are not obstructed is welded to the extruded material emerging from the main aperture 16 of the orifice 15 by their plasticity, and comes to constitute the side walls of the sealing profile of the weatherstrip.

Cellular elastomeric material is supplied simultaneously to the chamber 33 of the movable body 12 through the aperture 34. This material is extruded through the orifice 32 and forms the curved distal portion of the tubular sealing profile. The longitudinal edges of the extrusion which emerges from the extrusion orifice 32 are welded to the corresponding edges of the extrusions emerging from the arms 17 of the orifice 15 of the outer die.

The controlled variation (by means of operating and control devices of known type, not shown) of the position of the movable body 12 relative to the orifice 15 of the outer die varies the height of the side walls of the sealing profile of the weatherstrip. Gas is blown under pressure, in known manner, into the tubular sealing profile emerging from the extruder as a whole so as to prevent the collapse of the profile which, when it has just emerged from the extruder, is still in the plastic state. The gas flow helps to impart an approximately circular shape to the sealing profile even when the arms 17 of the orifice of the outer die are almost entirely uncovered, so that the sealing profile can assume the maximum possible transverse dimensions.

Figure 11 shows a variant of the extrusion die described above. With this variant, a branch 32a of the orifice 32 provided in the body 12 to enable the production of an additional rib which projects outwardly from the sealing profile can be obstructed partially (or even completely) and to a variable extent by means of an obturator 50 (movable between two guides 51, 52 on the outer face of the body 12). The obturator 50 is controlled (in known manner) by an operating device, not shown.

The orifice 32 in the movable body 12 may be provided with several outer branch apertures in a manner similar to that shown in Figure 11, to enable a corresponding plurality of ribs to be formed on selected longitudinal portions of the sealing profile.

Although reference has been made in the examples described to weatherstrips with anchoring profiles which are generally flat (before bending), obviously the invention also extends to weatherstrips with anchoring profiles with other cross-sections and to extrusion heads adapted to produce such weatherstrips.

Moreover, the invention is not intended to be limited to weatherstrips with tubular sealing profiles of cellular material.

## Claims

1. An extruded weatherstrip, particularly for the edge (5) of an aperture in the bodywork of a motor vehicle or for the edge of a closure element for such an aperture, the weatherstrip (1) comprising an anchoring profile (2) of solid elastomeric material and a tubular sealing profile (4) of elastomeric material which is coextruded with the anchoring profile (2) and which has increased or reduced transverse dimensions in portions which are intended to be applied to critical zones of the said edge (3); characterised in that the wall thickness of the tubular sealing profile (4) is substantially constant throughout the length thereof.

2. A method for extruding a weatherstrip according to Claim 1, comprising the steps of
- providing a die (10) with an extrusion orifice (15) including a main aperture (16) whose shape corresponds to the cross-section of the anchoring profile (2) and two arms (17) which branch from the main aperture (16) on the same side thereof; and
- supplying a flow of an elastomeric material through the orifice (15) of the die (10); characterised in that it includes further the steps of
- providing an extruder (12) adjacent the orifice (15) of the die (10) and having an orifice (32) with an arcuate shape which corresponds to a distal portion of the wall of the sealing profile (4);
- supplying a flow of an elastomeric material through the orifice (32) of the movable extruder (12);
- obstructing the distal portions of the branches (17) of the orifice (15) of the die (10) to a variable extent; and
- joining the longitudinal edges of the extrusion emerging from the orifice (32) of the movable extruder (12) to the corresponding edges of the extrusion emerging from the arms (17) of the orifice (15) of the die (10).

3. An extrusion head for extruding a weatherstrip according to Claim 1, including an extrusion die (10) having an extrusion orifice (15) including a main shaped aperture (16) for extruding the anchoring profile (2) and two arms (17) which communicate with the main aperture (16) for the extrusion of corresponding proximal portions of the side walls of the sealing profile (4); characterised in that a movable body (12) is slidably mounted on the die (10) in such a way that it can obstruct the distal portions or the arms (17) of the orifice (15) of the die (10) to a variable extent; a second extrusion orifice (32) being formed in the opposite surface of the movable body (12) from the die (10) and having a shape which corresponds to an arcuate distal portion of the end wall of the sealing profile (4) and which terminates in correspondence with the side (12a) of the body (12) which obstructs the arms (17) of the orifice of the die (10) so that, in operation, the longitudinal edges of the extrusion emerging from the orifice (32) of the movable body (12) are welded to corresponding edges of the extrusion emerging from the arms (17) of the orifice of the die (10), thus forming a sealing profile whose cross-section varies according to the position of the movable body (12) relative to the orifice (15) of the die (10).

4. An extrusion head according to Claim 3, characterised in that it includes a further die (11) fixed to the first die (10) on the opposite side from the movable body (12); the further die (11) having an extrusion orifice (31) whose shape corresponds to that of the main aperture (16) of the orifice (15) of the other die (10); the dies (10, 11) being clamped together so that the orifice (31) of the further die (11) is aligned with the main aperture (16) of the orifice (15) of the other die (10); means being provided for supplying a first elastomeric material through the orifice (31) of the further die (11) and the main aperture (16) of the other die (10) and a second elastomeric material through the arms (17) of the orifice (15) of the other die (10) and the orifice (32) of the movable body (12).

5. An extrusion head according to Claim 4, characterised in that at least one passage (28 to 30) is defined between the dies (10, 11) for supplying the second elastomeric material to the arms (17) of the orifice (15) of the first die (10).

6. An extrusion head according to any one of Claims 3 to 5, characterised in that a chamber (33) is formed in the movable body (12) and communicates with the orifice (32) in the movable body (12); an aperture (34) being formed in the end face of the body (12) in which the orifice (32) is formed and opening into the chamber (33) to enable the supply of the second elastomeric material to the orifice (32) through the chamber (33).

7. An extrusion head according to any one of Claims 3 to 6, characterised in that it also includes means (50, 51, 52; 32a) for enabling the production of at least one longitudinal external rib on selected longitudinal portions of the sealing profile.

## Patentansprüche

1. Extrudierter Dichtungsstreifen, insbesondere für den Rand (5) einer Öffnung in der Karosserie eines Kraftfahrzeugs oder für den Rand eines Verschlußelements für eine derartige Öffnung, wobei der Dichtungsstreifen (1) ein Verankerungsprofil (2) aus festem, elastomerem Material und ein röhrenförmiges Dichtungsprofil (4) aus elastomerem Material umfaßt, welches mit dem Verankerungsprofil (2) koextrudiert ist, und welches in Abschnitten, die zur Anbringung an kritischen Bereichen des Rands (3) vorgesehen sind, vergrößerte oder verkleinerte Querabmessungen aufweist,
dadurch gekennzeichnet,
daß die Wandungsdicke des röhrenförmigen Dichtungsprofils (4) entlang dessen Länge im wesentlichen konstant ist.

2. Verfahren zum Extrudieren eines Dichtungsstreifens nach Anspruch 1, umfassend die Schritte:
- Vorsehen einer Form (10) mit einer Extrusions-Austrittsöffnung (15) umfassend eine Hauptöffnung (16), deren Form dem Querschnitt des Verankerungsprofils (2) entspricht, und zwei Arme (17), die von der Hauptöffnung (16) auf der gleichen Seite derselben abzweigen, und
- Bereitstellen eines Stroms aus einem elastomeren Material durch die Austrittsöffnung (15) der Form (10), dadurch gekennzeichnet, daß es ferner die Schritte umfaßt:
- Vorsehen eines Extruders (12) nahe der Austrittsöffnung (15) der Form (10) mit einer Austrittsöffnung (32) mit einer bogenförmigen Form, welche einem distalen Abschnitt der Wandung des Dichtungsprofils (4) entspricht,
- Bereitstellen eines Stroms aus einem elastomeren Material durch die Austrittsöffnung (32) des bewegbaren Extruders (12),
- Versperren der distalen Abschnitte der Abzweigungsarme (17) der Austrittsöffnung (15) der Form (10) in veränderbarem Maß; und
- Verbinden der Längsränder des aus der Ausrittsöffnung (32) des bewegbaren Extruders (12) austretenden Extrusions-Rohlings mit den entsprechenden Rändern des aus den Armen (17) der Austrittsöffnung (15) der Form (10) austretenden Extrusions-Rohlings.

3. Extrusionskopf zum Extrudieren eines Dichtungsstreifens nach Anspruch 1, umfassend eine Extrusionsform (10) mit einer Extrusions-Austrittsöffnung (15) mit einer geformten Hauptöffnung (16) zum Extrudieren des Verankerungsprofils (2) und zwei Armen (17), welche mit der Hauptöffnung (16) zum Extrudieren von entsprechenden proximalen Abschnitten der Seitenwandungen des Dichtungsprofils (4) in Verbindung stehen,
dadurch gekennzeichnet,
daß ein bewegbarer Körper (12) auf der Form (10) derart verschiebbar angebracht ist, daß er die distalen Abschnitte der Arme (17) der Austrittsöffnung (15) der Form (10) in veränderbarem Maß versperren kann,
wobei eine zweite Extrusions-Austrittsöffnung (32) in der der Form (10) entgegengesetzten Oberfläche des bewegbaren Körpers (12) gebildet ist und eine Form aufweist, welche einem bogenförmigen distalen Abschnitt der Endwandung des Dichtungsprofils (4) entspricht, und welche mit der Seite (12a) des Körpers (12) übereinstimmend endet, welche die Arme (17) der Austrittsöffnung der Form (10) versperrt, so daß im Betrieb die Längsränder des aus der Austrittsöffnung (32) des bewegbaren Körpers (12) austretenden Extrusions-Rohlings mit entsprechenden Rändern des aus den Armen (17) der Austrittsöffnung der Form (10) austretenden Extrusions-Rohlings verschweißt werden, wodurch ein Dichtungsprofil gebildet wird, dessen Querschnitt sich gemäß der Stellung des bewegbaren Körpers (12) relativ zur Austrittsöffnung (15) der Form (10) verändert.

4. Extrusionskopf nach Anspruch 3,
dadurch gekennzeichnet,
daß er eine weitere, an der ersten Form (10) auf der dem bewegbaren Körper (12) entgegengesetzten Seite festgelegte Form (11) umfaßt, wobei die weitere Form (11) eine Extrusions-Austrittsöffnung (31) aufweist, deren Form derjenigen der Hauptöffnung (16) der Austrittsöffnung (15) der anderen Form (10) entspricht, wobei die Formen (10, 11) derart zusammengeklemmt sind, daß die Austrittsöffnung (31) der weiteren Form (11) zu der Hauptöffnung (16) der Austrittsöffnung (15) der anderen Form (10) ausgerichtet ist, wobei Mittel zum Bereitstellen eines ersten elastomeren Materials durch die Austrittsöffnung (31) der weiteren Form (11) und die Hauptöffnung (16) der anderen Form (10) sowie eines zweiten elastomeren Materials durch die Arme (17) der Austrittsöffnung (15) der anderen Form (10) und die Austrittsöffnung (32) des bewegbaren Körpers (12) vorgesehen sind.

5. Extrusionskopf nach Anspruch 4,
dadurch gekennzeichnet,
daß wenigstens ein Durchgang (28 bis 30) zwischen den Formen (10, 11) zum Zuführen des zweiten elastomeren Materials zu den Armen (17) der Austrittsöffnung (15) der ersten Form (10) gebildet ist.

6. Extrusionskopf nach einem der Ansprüche 3 bis 5,
dadurch gekennzeichnet,
daß eine Kammer (33) in dem bewegbaren Körper (12) gebildet ist und mit der Austrittsöffnung (32) in dem bewegbaren Körper (12) in Verbindung steht, wobei eine Austrittsöffnung (34) in der Stirnfläche des Körpers (12) gebildet ist, in welcher die Austrittsöffnung (32) gebildet ist, und sich in die Kammer (33) öffnet, um das Zuführen des zweiten Elastomers nach dem Austrittsöffnung (32) durch die Kammer (33) zu ermöglichen.

7. Extrusionkopf nach einem der Ansprüche 3 bis 6, dadurch gekennzeichnet daß er auch Mittel (50, 51, 52, 32a) umfaßt, um die Produktion von mindestens einer äußeren Längsrippe Uber ausgewählten Längsteilen des Dichtungsprofils zu ermöglichen.

## Revendications

1. Bande de joint extrudée, en particulier pour le bord (5) d'une ouverture de la caisse d'un véhicule automobile, ou pour le bord d'un élément de fermeture prévu pour une telle ouverture, la bande de joint (1) comprenant un profil d'ancrage (2) en matière élastomère massive, et un profil d'étanchéité tubulaire (4) en matière élastomère qui est coextrudé avec le profil d'ancrage (2) et qui possède des dimensions transversales augmentées ou réduites dans des parties qui sont destinées à être montées sur des zones critiques dudit bord (3), caractérisée en ce que l'épaisseur de paroi du profil d'étanchéité tubulaire (4) est sensiblement constante sur toute sa longueur.

2. Procédé pour extruder une bande de joint selon la revendication 1, comprenant les phases consistant à :
- préparer une filière (10) munie d'un orifice d'extrusion (15) qui présente une ouverture principale (16) dont la forme correspond à la section du profil d'ancrage (2) et deux branches (17) qui partent de ladite ouverture principale (16), sur le même côté de celle-ci ; et
- introduire un flux de matière élastomère à travers l'orifice (15) de la filière (10) ; caractérisé en ce qu'il comprend en outre les phases consistant à :
- préparer une extrudeuse (12) adjacente à l'orifice (15) de la filière (10) et présentant un orifice (32) ayant une forme courbe qui correspond à une partie distale de la paroi du profil d'étanchéité (4) ;
- introduire un flux de matière élastomère à travers l'orifice (32) de l'extrudeuse mobile (12) ;
- obstruer les parties distales des branches (17) de l'orifice (15) de la filière (10) dans une mesure variable ; et
- réunir les bords longitudinaux de l'extrudé émergeant de l'orifice (32) de l'extrudeuse mobile (12) aux bords correspondants de l'extrudé qui émergent des branches (17) de l'orifice (15) de la filière (10).

3. Tête d'extrusion destinée à extruder une bande de joint selon la revendication 1, comprenant une tête d'extrusion (10) ayant un orifice d'extrusion (15) qui présente une ouverture principale profilée (16) servant à extruder le profil d'ancrage (2) et deux branches (17) qui communiquent avec l'ouverture principale (16) pour l'extrusion de parties proximales correspondantes des parois latérales du profil d'étanchéité (4) ; caractérisée en ce qu'une pièce mobile (12) est montée coulissante sur la filière (10) de manière à pouvoir obstruer les parties distales des branches (17) de l'orifice (15) de la filière (10) dans une mesure variable ;
un deuxième orifice d'extrusion (32) étant formé dans la surface de la pièce mobile (12) qui est à l'opposé de la filière (10) et ayant une forme qui correspond à une partie distale courbe de la paroi d'extrémité du profil d'étanchéité (4) et qui se termine au droit du côté (12a) de la pièce (12) qui obstrue les branches (17) de l'orifice de la filière (10) de telle manière qu'en fonctionnement, les bords longitudinaux de l'extrudé qui émergent de l'orifice (32) de la pièce mobile (12) se soudent aux bords correspondants de l'extrudé qui émergent des branches (17) de l'orifice de la filière (10), en formant ainsi un profil d'étanchéité dont la section transversale varie selon la position de la pièce mobile (12) par rapport à l'orifice (15) de la filière (10).

4. Tête d'extrusion selon la revendication 3, caractérisée en ce qu'elle comprend une filière additionnelle (11) fixée à la première filière (10) sur le côté qui est à l'opposé de la pièce mobile (12) ; la filière additionnelle (11) ayant un orifice d'extrusion (31) dont la forme correspond à celle de l'ouverture principale (16) de l'orifice (15) de l'autre filière (10) ; les filières (10, 11) étant serrées ensemble de telle manière que l'orifice (31) de la filière additionnelle (11) soit aligné sur l'ouverture principale (16) de l'orifice (15) de l'autre filière (10) ; des moyens étant prévus pour acheminer une première matière élastomère à travers l'orifice (31) de la filière additionnelle (11) et à travers l'ouverture principale (16) de l'autre filière (10), et une deuxième matière élastomère à travers las branches (17) de l'orifice (15) de l'autre filière (10) et l'orifice (32) de la pièce mobile (12).

5. Tête d'extrusion selon la revendication 4, caractérisée en ce qu'au moins un passage (28 à 30) est défini entre les filières (10, 11) pour acheminer la deuxième matière élastomère aux branches (17) de l'orifice (15) de la première filière (10).

6. Tête d'extrusion selon une quelconque des revendications 3 à 5, caractérisée en ce qu'une chambre (33) est formée dans la pièce mobile (12) et communique avec l'orifice (32) de la pièce mobile (12) ; une ouverture (34) étant formée dans la face terminale de la pièce (12) dans laquelle l'orifice (32) est formé et débouchant dans la chambre (33) pour permettre l'acheminement du matière élastomère vers l'orifice (32) à travers la chambre (33).

7. Tête d'extrusion selon une quelconque des revendications 3 à 6, caractérisée en ce qu'elle comprend aussi moyens (50, 51, 52, 32a) pour permettre la production de au moins un bourrelet longitudinal exterior sur portions longitudinal sélectionné du profil d'étanchéite (4).
